# EUROPEAN PATENT APPLICATION

(11) **EP 2 284 786 A1**
(43) Date of publication of application: **16.02.2011**
(21) Application number: 10170887.3
(22) Date of filing: 27.07.2010
(51) Int. Cl.: G06Q 30/00

(54) **Management of advertisements**

(30) Priority: 31.07.2009 ES 200930545
(71) Applicant: Vodafone Group PLC, Newbury Berkshire RG14 2FN (GB); Vodafone España, S.A.U., 28108 Alcobendas (ES)
(72) Inventor: Esteve Asensio, Guillermo, E-28050 Madrid (ES); Valverde Fuster, Juan Jose, E-28050 Madrid (ES); Garate Mutiloa, Lucia, E-28050 Madrid (ES); Martinez Rellan, Diego, E-28050 Madrid (ES); Martin Hormigos, Enrique Jorge, E-28050 Madrid (ES)
(74) Representative: Keston, David Arthur

(57) **Abstract**

A system and method for the management of advertisements in an graphic object such as an application or web page The system includes an ad-server manager (2) that is configured: to receive (from a user-side process that generates graphic objects such as application windows or web pages (1)) a request (10') for an ad-server (3) to be used; to select (11) the ad-server (3') to be used; and to send (12) information related to the selected ad-server (3') to the user-side process (1). The user-side process (1) then requests (14) the selected ad-server (3') to provide at least one advertisement; and receives (15) said at least one advertisement from the selected ad-server (3'). As a result, the ad-server manager (2) is able to choose the most suitable ad-server for each request, taking account of issues such as temporary unavailability or backwards compatibility. In addition, the applications/web pages may be made lighter, easier to construct and cheaper because they do not need to include the code to recover advertisements.

## Description

### FIELD OF THE INVENTION

The present invention is comprised within the field of advertisements included in web pages or applications. More specifically it refers to a system and method for the management of advertisements in an application or web page.

### BACKGROUND OF THE INVENTION

Computer processes that generate graphic objects (such as application windows and/or web pages in a browser application) may be configured to display advertisements. To facilitate this, the adverts may be obtained for display from sources that are known as *"ad-servers".* This is required by the own nature of the content to be advertised that changes frequently, requiring updates each time that the web page or the application is used. The amount of accesses to the ad-servers is also used for calculating payments between the involved parties.

The relationship between each user-side graphic object generating process (rendering an application window or a web page) with (at least one, but more than one) ad-server is determined by its construction (i.e. its coding) and based on that it is able to recover content solely from the selected ad-server. When it is needed to access to a new ad-server after the construction is finished, it is required to make a new construction of the graphic object (the application or web page) as well as to distribute that object.

The need for the re-construction is due to the proprietary protocol with each set of ad-servers (from different companies) to increase the fidelity of the application or web page with a single supplier of advertisements.

Known ad-server solutions include those described in:
- **International patent application** WO0235024 **-** a method, device and computer readable medium for controlling the presentation of primary content (such as an e-mail message, web page, computer game or other executable program) such that secondary content, including advertising, is always presented to a user in the manner that is intended. An audience management system, through the use of audience management software and audience management metadata, ensures that it is not possible for a user to be presented with primary content without also being presented with secondary content as it was intended to be presented. The primary content is delivered to a user in encrypted form to prevent unauthorized access; the user is also provided with the secondary content, audience management metadata specifying rules for the presentation of the primary content and the secondary content at the user's computer, and audience management software that authenticates all the aforesaid components. Digital rights management may also form part of the feature set of the audience management software. Targeting of secondary content is also possible. Countermeasures against attack by hackers to corrupt the primary content, secondary content and/or the audience management metadata are also described.
- **US patent application** US2007011244 - a wireless communication system for transmission of digital messages to users of wireless communication devices on various wireless networks. Messages to users are encoded with formatting corresponding to the network and/or subscriber device to which a message is to be delivered. A digital content server can operate to create, encode and transmit messages to users of a plurality of different wireless networks.

Nevertheless, the application hereinafter described proposes a method to enable an ad-server without any changes in the application or web pages.
- **US patent application** US2006240808 - a method of advertising and includes monitoring transmission data of one or more cellular towers located along a freeway and recording an identification and a time and date stamp for one or more cellular devices that establish communication via the one or more cellular towers as the at least one cellular device travels within a user vehicle along the freeway. Further, the method includes determining one or more types of media files that are supported by the cellular device and monitoring the movement of the one or more cellular devices along the freeway. The method also includes transmitting one or more advertisements to the at least one cellular device when the cellular device is within a predetermined range of a freeway exit. The one or more advertisement is transmitted in a format of the one or more types of media files supported by the cellular device. The method hereinafter described gives flexibility and standardization for the advertising source selection method and can be embebbed in any application which request advertisings.
- **US patent application** US2004260767 - a new ad campaign management system, which enables a campaign manager to determine ad type, scenario and performance parameters. These preferences are translated into campaign instruction sets that influence the presentation of the web-pages advertisement. The activation of the advertisements is performed by a java script program that is activated once the user starts to download the relevant web-page. This system enable real time control of web-page advertisement presentation according to pre-determined instruction rules, technical browsing parameters, real time events, web-page structure and content. The ad controllable characteristics include size parameters, location parameters, animation behavior parameters, appearance period and timing conditional logic, style format parameters.; The technical browsing parameters include: browser type and version, operating system type, communication bandwidth speed, width and height of browsing window, IP address etc. The triggering event includes scheduled events, browsing events, and browsing interaction with user.

- **US patent application** US2002077900 - delivers interstitial media content, such as advertisements during a user's navigation of an Internet protocol-based product, for example, a graphical user interface. The present invention may display advertisement content positioned within a web page or may display a full screen advertisement before a new web page is presented. As an interstitial advertisement, the advertisement appears between web page requests such that when a user action requests a new page, the present invention can launch an ad before displaying the requested content. The ads are preferably non-interruptible, such that the user cannot fast-forward or skip the advertisement. A preferred method detects a web page address request and delivers advertising content in an Internet protocol format to the user independently of any code associated with the requested web address.; The invention may also deliver ads only after a specified time delay has elapsed, thus regulating the frequency of advertisements independent of the user's movement through the Internet protocol-based product. In another preferred embodiment, the invention may also deliver ads only after a specified number of address changes have been detected. An additional preferred embodiment may also deliver an advertisement unrelated to whether a user makes a web page request.
- **US patent application** US2001047294 - a system and method for adding an advertisement to a personal communication and providing additional communication data to a recipient that interacts with the advertisement regardless of the network device the recipient is utilizing. A sender network device communicates with an advertising application operating on a Web site to generate a personal communication containing a sender-selected advertisement. When the sender indicates that the personal communication is to be sent, the advertising application stores the message data, sender data, and advertisement data in a Web site memory device, and utilizes the message, sender, and advertisement data to format, and send, a personal communication containing a sender-selected advertisement to the designated recipient. If the sender-selected advertisement is provided by a third party advertiser, the message, sender, and advertisement data is utilized to compensate the sender of that advertisement for sending it to at least one recipient. If the advertisement is interactive, and the advertisement is interacted with, the advertising application will provide the recipient with additional communication data in a format that can be understood by the recipient network device. This is done by utilizing a platform independent architecture, which includes a device and data neutral software language, such as XML (Extensible Markup Language), along with an advertising application divided into separate output and data processing stages. When a recipient interacts with an interactive advertisement, the request data (contained in the advertisement's embedded URL) calls the data processing layer.; The data processing layer uses the request data (which may contain message data that is linked to sender data and advertisement data) to retrieve data from the Web site memory device. A portion of the retrieved data is then passed on to the output stage, where it is placed in a template that has been optimized for the targeted recipient network device.
- **US patent application** US2001049701 - a web page advertisement system for generating web page coding with a reference to a background advertisement. In some embodiments, the background reference causes an advertisement image to be tiled, or watermarked, across an end user browser screen behind the text and other foreground elements of a web page since the background reference includes, in some embodiments, a background attribute of a hypertext markup language (HTML) body tag. In one embodiment, static web page coding is created with a background reference to a specific background advertisement, optionally stored remotely from the static web page coding, while in another embodiment the background reference is a reference to a background advertisement serving software program, also optionally stored remotely, which is configured to serve through a plurality of background advertisements. In other embodiments, the web page coding is created dynamically, such as through one or more Common Gateway Interface (CGI) scripts, for example, with the background reference, being to a particular advertisement in some embodiments and to a background advertisement serving software program in other embodiments. In some embodiments, the background advertisement is assigned to the entire web page, while in other embodiments, only particular frames or portions of tables are assigned a background advertisement. In some embodiments, exposures of the background advertisements are tracked and used to generate bills since the exposures are provided in exchange for value, such as monetary consideration, for example. It is a specific method to distribute advertisements which is not the subject matter of the hereinafter described invention.

### SUMMARY OF THE INVENTION

The proposed invention hereinafter described solves the problem of flexibility in the managing of ad-servers without the need of any change in the construction of the application or web page. The proposed invention describes a method for selecting the advertising dispatch source from a plurality of sources and for providing them. Therefore, there is a high flexibility in choosing the advertising source instead of having one particular source. This capability of "adapting to future changes" is a non-evident technical effect which it is not obtained from the several methods proposed in the prior art.

The main advantages with respect to the prior art are the following:
- The ad-servers manager is able to choose the most suitable ad-server for each request, having in consideration every type of issues, as temporal unavailability or backwards compatibility.
- The applications and web pages are lighter, easier to construct and cheaper because they do not need to include the code to recover advertisements.
- This invention provides future-proof capabilities to the deployed base of applications and web pages using the exclusive functionalities provided by the ad-servers manager, enabling the enhancement of the way advertisements are handled and displayed without any change in those applications and web pages.
- The present invention develops an automated method to select the source of advertisements and to select the method to handle them.

The system for the management of advertisements rendered in a graphic object comprises an ad-server manager configured to:
- receive a request, from a user-side graphic object generating process, for an ad-server to be used;
- select the ad-server to be used;
- send information related to the selected ad-server to the user-side graphic object generating process;

The user-side graphic object generating process is configured to:
- request the selected ad-server to provide at least one advertisement; and
- receive said at least one advertisement from the selected ad-server.

The information related to the selected ad-server can comprise executable code for accessing said selected ad-server and retrieving the at least one advertisement.

The user-side graphic object generating process can be configured to obtain, starting from the information related to the selected ad-server sent by the ad-server manager, executable code to access the selected ad-server and retrieve the at least one advertisement.

The ad-server manager can be configured to, after selecting the ad-server to be used, increase (increment) a dispatch counter associated with the selected ad-server.

The ad-server manager can be configured to:
- receive, together with the request from the user-side graphic object generating process, user parameters related to the type of advertisement to be requested from the ad-server; and
- select the ad-server to be used according to said user parameters.

Another aspect of the present invention is a method for the management of advertisements in a graphic object. The method comprises:
- receiving, from a user-side graphic object generating process, a request for an ad-server manager to select an ad-server to be used;
- selecting, at the ad-server manager, the ad-server to be used;
- sending, from the ad-server manager to the user-side graphic object generating process, information related to the selected ad-server;
- the user-side graphic object generating process requesting at least one advertisement from the selected ad-server and receiving said at least one advertisement from the selected ad-server.

The method can comprise obtaining, once the user-side graphic object generating process receives the information related to the selected ad-server, executable code to access the selected ad-server and retrieve the at least one advertisement.

The method can comprise, after selecting the ad-server manager the ad-server to be used, increasing (incrementing) a dispatch counter associated with the selected ad-server.

The method preferably comprises:
- the user-side graphic object generating process sending, together with the request for an ad-server to be used, user parameters related to the type of advertisement to be requested from the ad-server; and
- selecting the ad-server to be used according to said user parameters.

### BRIEF DESCRIPTION OF THE DRAWINGS

A series of drawings which aid in better understanding the invention and which are expressly related with an embodiment of said invention, presented as a non-limiting example thereof, are very briefly described below.
FIG. 1 shows a diagram of the steps of the method implemented in the application or web page.

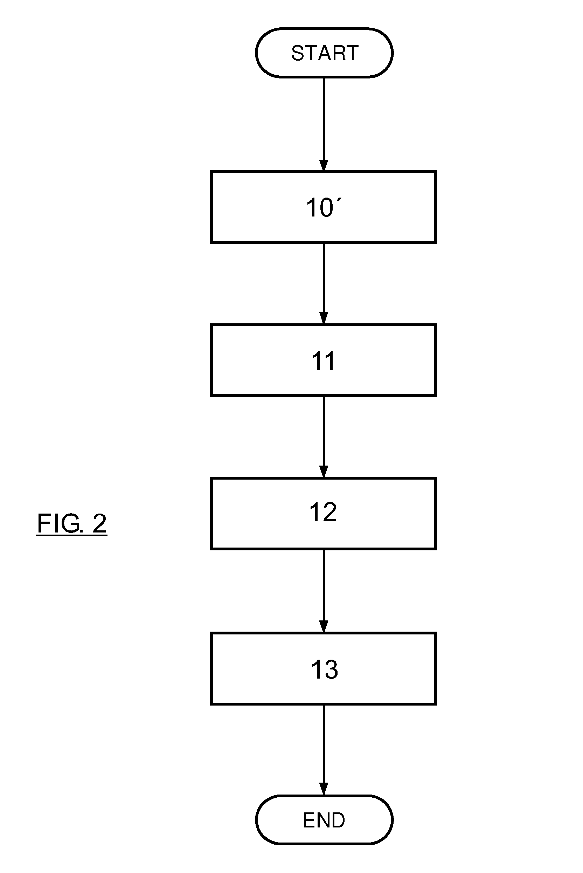

FIG. 2 shows a diagram of the steps of the method implemented in the ad-server manager.
FIG. 3 shows a schematic diagram of the system and method according to the present invention.

### PREFERRED EMBODIMENT OF THE INVENTION

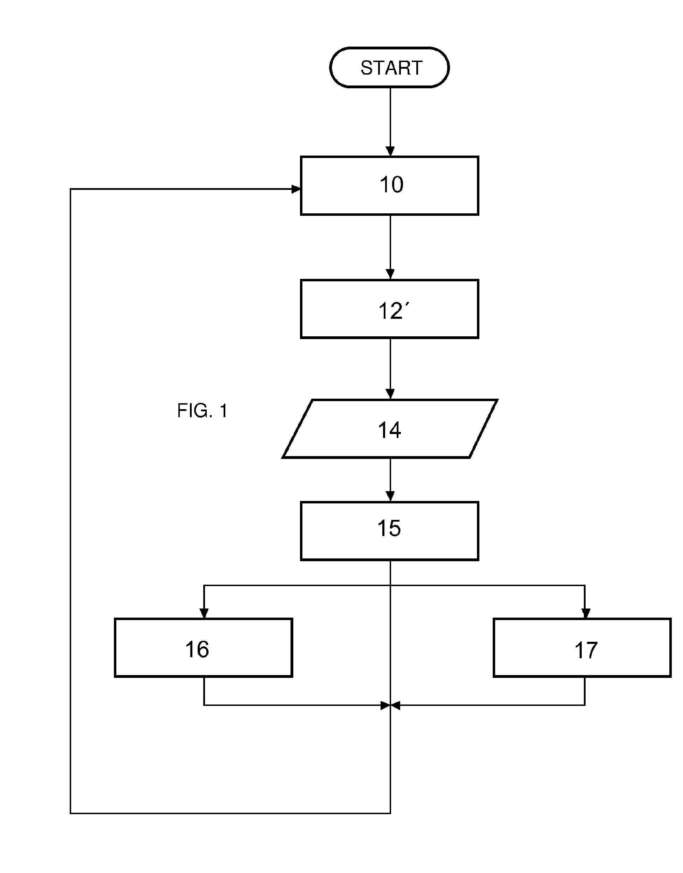

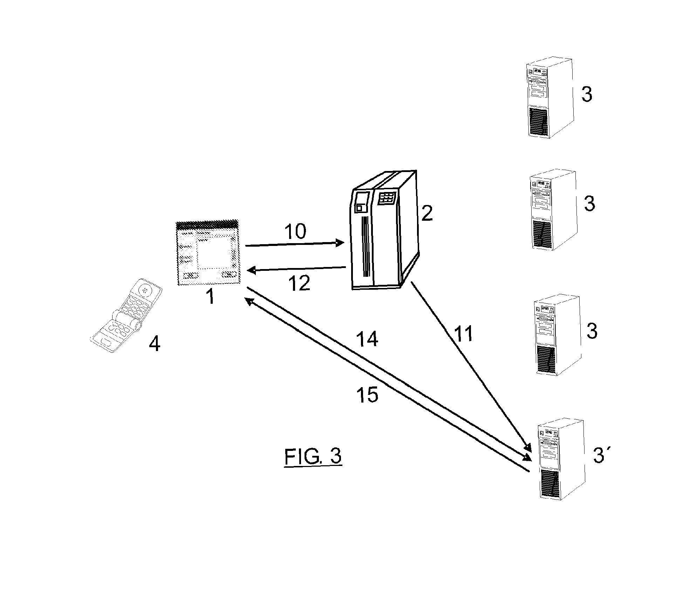

As shown in the **figures 1** (which shows a diagram of the steps of the method implemented in the application or web page), **2** (which shows a diagram of the steps of the method implemented in the ad-server manager) **and 3** (a schematic view of the components of the system and steps of the method according to the present invention), the method for the management of sources and advertisements with respect to the user's side (the application or web page) and server's side (the ad-manager) comprises the following steps:
- The application or web page 1 (running for instance in a mobile device 4, as shown in Fig. 3) contacts the ad-server manager 2 and requests 10 the ad-server 3 to be used. Together with said request the application or web page 1 can send user parameters to ease the decision on which advertisement has to be chosen.
- The ad-server manager 2 receives 10' the ad request and user parameters, if any, selects 11 the ad-server to be used (takes a decision on which ad-server 3 to be used) and replies 12 to the application or web page 1 with either the selected ad-server 3' or the executable code to be used with that particular selected ad-server 3' or both. This answer can be given in several steps or in a distributed architecture, that is, the answer can be presented as a single response or sequentially if a dialogue is established (e.g. firstly, the ad-server manager provides the application or web page 1 with information about which ad-server 3' to use and with this information the application or web page 1 re-interrogates the ad-server manager 2 or a different element to recover, if needed, the executable code to be used). The ad-server manager 2 increases 13 the dispatch counter associated with the selected ad-server 3' in order to know the amount of requests for this selected ad-server 3'.
- Once the application or web page 1 receives 12' the selected ad-server 3', or the executable code to be used with that particular selected ad-server 3', the application performs the request 14 of advertisements to the selected ad-server 3' using the appropriate protocol. The application or web page 1 receives 15 the advertisement from the selected ad-server 3' and then shows it to the user. Once the time to show the advertisement expires 16 or the application or web page requests 17 another advertisement (e.g., the user clicks on a web link such that another web page 1 is to be loaded in the web browser), the process starts again.

## Claims

1. System for the management of advertisements in a graphic object, **characterized in that** it comprises an ad-server manager (2) configured to:
- receive a request (10'), from a user-side graphic object generating process (1), for an ad-server (3) to be used;
- select (11) the ad-server (3') to be used;
- send (12) information related to the selected ad-server (3') to the user-side graphic object generating process (1);
the user-side graphic object generating process (1) being configured to:
- request (14) the selected ad-server (3') to provide at least one advertisement;
and
- receive (15) said at least one advertisement from the selected ad-server (3').

2. System for the management of advertisements according to claim 1, **wherein** the information related to the selected ad-server (3') comprises executable code for accessing said selected ad-server (3) and retrieving the at least one advertisement.

3. System for the management of advertisements according to claim 1, **wherein** the user-side graphic object generating process (1) is configured to obtain, starting from the information related to the selected ad-server (3') sent by the ad-server manager (2), executable code to access the selected ad-server (3) and retrieve the at least one advertisement.

4. System for the management of advertisements according to any of claims 1-3, **wherein** the ad-server manager (2) is configured to, after selecting (11) the ad-server (3') to be used, incrementing (13) a dispatch counter associated with the selected ad-server (3').

5. System for the management of advertisements according to any of claims 1-4, **wherein** the ad-server manager (2) is configured to:
- receive, together with the request from the user-side graphic object generating process (1), user parameters related to the type of advertisement to be requested from the ad-server (3) ; and
- select (11) the ad-server (3') to be used according to said user parameters.

6. Method for the management of advertisements in a graphic object, **characterized in that** it comprises:
- receiving, from a user-side graphic object generating process (1), a request (10) for an ad-server manager (2) to select an ad-server (3) to be used;
- selecting (11), at the ad-server manager (2), the ad-server (3') to be used;
- sending (12), from the ad-server manager (2) to the user-side graphic object generating process (1), information related to the selected ad-server (3');
- the user-side graphic object generating process (1) requesting (14) at least one advertisement from the selected ad-server (3') and receiving (15) said at least one advertisement from the selected ad-server (3').

7. Method for the management of advertisements according to the previous claim, **wherein** the information related to the selected ad-server (3') comprises executable code for accessing said selected ad-server (3') and retrieving the at least one advertisement.

8. Method for the management of advertisements according to claim 6, **wherein** it comprises obtaining, once the user-side graphic object generating process (1) receives (12') the information related to the selected ad-server (3'), executable code to access the selected ad-server (3') and retrieve the at least one advertisement.

9. Method for the management of advertisements according to any of claims 6-8, **wherein** it comprises, after selecting (11) the ad-server manager (2) the ad-server (3') to be used, incrementing (13) a dispatch counter associated with the selected ad-server (3').

10. Method for the management of advertisements according to any of claims 6-9, **wherein** it comprises:
- the user-side graphic object generating process (1) sending user parameters together with the request for an ad-server (3) to be used, said user parameters being related to the type of advertisement to be requested from the ad-server (3); and
- selecting (11) the ad-server (3') to be used according to said user parameters.
